Europäisches Patentamt

**European Patent Office**

**Office européen des brevets**

(19)

(11) Veröffentlichungsnummer: **0 046 890**
A2

(12) # EUROPÄISCHE PATENTANMELDUNG

(21) Anmeldenummer: **81106093.8**

(22) Anmeldetag: **04.08.81**

(51) Int. Cl.³: **C 08 K 3/22**
**C 09 K 3/28, D 06 M 11/12**

(30) Priorität: **27.08.80 DE 3032192**

(43) Veröffentlichungstag der Anmeldung:
**10.03.82 Patentblatt 82/10**

(84) Benannte Vertragsstaaten:
**BE CH FR GB IT LI NL SE**

(71) Anmelder: **Chemische Fabrik Kalk GmbH**
**Kalker Hauptstrasse 22 Postfach 910157**
**D-5000 Köln 91(DE)**

(72) Erfinder: **Taubert, Rainer, Dr.**
**Paffrather Strasse 140**
**D-5000 Köln 80(DE)**

(72) Erfinder: **Kerscher, Utto, Dr.**
**Am Beissel 25**
**D-5042 Erftstadt 12(DE)**

(54) **Brandschutzausrüstung von Thermoplasten, Duromeren, Textilien und anderen brennbaren Stoffen mit Antimonoxiverbindungen.**

(57) Brandgeschützte thermoplastische Kunststoffe, elastomere Kunststoffe, kautschukartige Kunststoffe, duromere Kunststoffe und Kautschuk mit einem Gehalt an halogen- und antimonhaltigen Brandschutzkomponenten der allgemeinen Formel $Sb_4O_5X_y$, worin X ein Chlor-, Brom- oder Sulfatanion und y 2 oder 1 ist.

EP 0 046 890 A2

Zur Brandschutzausrüstung von Thermoplasten, Duromeren, Textilien und anderen brennbaren Stoffen, die im Baugewerbe, für Transportmittel, Elektrogeräte und dergl. Verwendung finden, werden bevorzugt Chlor-, Brom-, Phosphor- und Stickstoffverbindungen eingesetzt.

Die Wirkung dieser Brandschutzmittel kann in vielen Fällen durch Antimontrioxid erheblich verbessert werden. Oftmals ist ein zufriedenstellender Brandschutz überhaupt erst beim Einsatz solcher Brandschutzmittel in Kombination mit Antimonverbindungen möglich.

Nach neueren Erkenntnissen wurden hierfür weitere Antimonverbindungen empfohlen, wie beispielsweise Kalium-Antimontartrat, Antimontriphenyl, Antimonphosphat oder Ammoniumhexafluorantimonat, die aber im Vergleich zu Antimontrioxid geringere synergistische Wirkung zeigen. Außerdem sind diese Verbindungen in der Regel nur mit erheblichem technischen Aufwand schwierig herzustellen.

So ergab sich die Aufgabe, eine Brandschutzformulierung zu finden, die einen hinreichenden Brandschutz gewährleistet und in Verbindung mit den obenerwähnten organischen Brandschutzmitteln die physikalischen Eigenschaften der Thermoplasten, Duromeren bzw. Textilien und anderen brennbaren Kunststoffen, in die sie eingearbeitet werden, nicht nachteilig beeinträchtigen.

Gegenstand der vorliegenden Erfindung sind brandgeschützte thermoplastische Kunststoffe, elastomere Kunststoffe, kautschukartige Kunststoffe, duromere Kunststoffe und Kautschuk mit einem Gehalt an halogen- und antimonhaltigen Brandschutzkomponenten. Kennzeichnend ist für diese Kunststoffe, daß sie als antimonhaltige Brandschutzkomponente solche der all-

gemeinen Formel $Sb_4O_5X_y$, worin X ein Chlor-, Brom- oder
Sulfatanion und y 2 oder 1 ist, in Mengen von 1 bis 20
Gew%, vorzugsweise 5 bis 10 Gew% enthalten.

Die genannten Antimonverbindungen der allgemeinen Formel
$Sb_4O_5X_y$, beispielsweise $Sb_4O_5Cl_2$, $Sb_4O_5Br_2$ oder $Sb_4O_5SO_4$,
lassen sich nach "Gmelin", Handbuch der anorgan.Chemie (18)
Sb-Band (1949) S. 467 bzw. 485 durch Erhitzen von Antimon-
III-chlorid bzw. Antimon-III-bromid mit Wasser herstellen.
Es sind weiße, in Wasser schwer lösliche Pulver, die hohe
Schüttgewichte und hohe Brechungsindicies aufweisen.

Werden zur Brandschutzausrüstung entsprechend der vorliegenden Erfindung halogenhaltige Antimonverbindungen eingesetzt, so kann dadurch der Anteil an halogenierten organischen Brandschutzmitteln, die als primäre Brandinhibitoren
anzusehen sind, wesentlich vermindert werden. Maßgebend für
einen guten Brandschutz für die obenerwähnten Kunststoffe
ist in den meisten Fällen die Menge an Halogen, die mit dem
organischen Brandschutzmittel in den Kunststoff eingearbeitet wird. Wird jedoch das Halogen mit Antimon als Halogenträger verwendet, so kann die einzusetzende Menge an herkömmlichen halogenhaltigen Brandschutzmitteln so weit vermindert werden, daß die enthaltene Halogenmenge aus organischer Halogenverbindung + Antimonhalogenid bzw. -oxihalogenid im Kunststoff entsprechend reduziert werden, ohne daß
die für eine ausreichende Brandschutzwirkung notwendige Halogenmenge vermindert wird.

Organische Halogenverbindungen, besonders im Zusammenwirken
mit Antimontrioxid, führen zwar in den meisten Kunststoffzusammensetzungen einen ausgezeichneten Brandschutz herbei,
aber die notwendige, oftmals recht große, Menge der eingearbeiteten organischen Brandschutzmittel wirkt vielfach nachteilig auf die physikalischen Eigenschaften der Kusntstoffe, in die sie eingearbeitet sind.

Die nachstehenden Tabellen zeigen Beispiele und Eigenschaftswerte für mit den erfindungsgemäßen Antimonoxiverbindungen
hergestellten Kunststoffe im Vergleich zu herkömmlichen
Formulierungen.

Die Zubereitung der Proben zur Brandprüfung und Bestimmung
der physikalischen Eigenschaften der einzelnen Kunststoffe
wird folgendermaßen durchgeführt:

Das Kunststoffgranulat oder -pulver wird mit den entsprechenden Brandschutzmitteln vermischt, diese Mischung über
einen Extruder extrudiert und auf einer Spritzgußmaschine
zu den entsprechenden Normkörpern verspritzt.

Die Verarbeitungstemperatur entspricht dabei den für den
Kunststoff üblichen Verarbeitungstemperaturen im Bereich
von 200 bis 270° C. Die Bestimmung des Oxigen-Indexes wird
nach ASTM-D-2863-72 durchgeführt. Ein Teil der Proben wird
nach DIN 4102 getestet. Ferner wird ein Test nach Underwriter's Laboratories UL 94 angewandt.

Die Erfindungsgemäßen Antimonoxihalogenide wurden in folgenden Kunststoffen eingearbeitet:

    A   in hochschlagzähes Polystyrol  (HIPS)
    B   in Acrylnitril-Butadien-Styrol-Polymerisat  (ABS)
    C   in Polytetramethylenterephthalat  (PTMT)
    D   in Polypropylen  (PP)
    E   in Hochdruckpolyäthylen  (LDPE)
    F   in Polyvinylchlorid  (PVC)
    G   in Gummi
    H   in ungesätt. Polyester-Harz  (UP-Harz)
    I   in Polyurethanschaum  (PUR)

Tabelle 1

| | HIPS (A) | | | ABS (B) | | PTMT (C) | | PP (D) | | LDPE (E) | |
|---|---|---|---|---|---|---|---|---|---|---|---|
| Kunststoff | 81 | 82 | 82 | 81 | 82 | 84 | 86 | 94,5 | 95,5 | 87 | 90 |
| Bromverbindung z.b. Nonabromdi-phenyläther | 14 | 10 | 10 | 14 | 10 | 12 | - | - | - | 9 | 5 |
| Dibrompropyl-dian | - | - | - | - | - | - | 8 | 3,5 | - | - | - |
| Decabromdi-phenyläther | - | - | - | - | - | - | - | - | 2 | - | - |
| $Sb_4O_5Cl_2$ | - | - | - | - | 8 | - | - | 6 | - | - | - |
| $Sb_4O_5Br_2$ | - | 8 | - | - | - | - | - | - | 2,5 | - | 5 |
| $Sb_4O_5SO_4$ | - | - | 8 | - | - | - | - | - | - | 4 | - |
| $Sb_2O_3$ | 5 | - | - | 5 | - | 4 | - | 2 | - | - | - |

(Angaben alle in Gew.-%)

Brandeigenschaften

| | HIPS (A) | | | ABS (B) | | PTMT (C) | | PP (D) | | LDPE (E) | |
|---|---|---|---|---|---|---|---|---|---|---|---|
| LOI % | 24 | 25 | 24 | 24 | 25 | 26 | 27 | - | - | - | - |
| DIN 4102 | B-1 | B-1 | B-1 | - | - | - | - | B-1 | B-1 | B-1 | B-1 |
| UL 94 | V-0 | V-0 | V-0 | V-0 | V-0 | V-0 | V-0 | V-2 | V-2 | V-2 | V-2 |

Physikal.Eigensch.

| | HIPS (A) | | | ABS (B) | | PTMT (C) | | PP (D) | | LDPE (E) | |
|---|---|---|---|---|---|---|---|---|---|---|---|
| Zugfestigkeit $N/mm^2$ | 25,2 | 21,2 | 20,0 | 40 | 40 | 89 | 90 | 25 | 25 | 15 | 15 |
| Schlagzähigkeit $KJ/m^2$ | 45 | 45 | 43 | 10 | 9 | 25 | 25 | 20 | 20 | oB | oB |
| Wärmeformbeständ. $^\circ C$ | 88 | 86 | 85 | 90 | 90 | 160 | 160 | 75 | 76 | - | - |
| elektr. Leitfähigkeit | $10^{14}$ | $10^{14}$ | $10^{14}$ | | | | | | | | |

- 5 -

- 6 -

0046890

Tabelle 2

**PVC (F)**

| Dioctylphthalat, | Gew.-Teile | 28 | 28 |
|---|---|---|---|
| Stabilisator | " | 1 | 1 |
| Farbstoff | " | 5 | 5 |
| $Sb_4O_5Br_2$ | " | - | 8 |
| $Sb_2O_3$ | " | 12 | - |
| Suspensions-PVC | " | 60 | 60 |

| Brandverhalten nach DIN 22 118 | | | |
|---|---|---|---|
| nicht zerstörte Restlänge | mm | 30 | 40 |
| LOI | % | 31 | 31,75 |

**Gummi (G)**

| Ruß | Gew.-Teile | 55 | 55 |
|---|---|---|---|
| Vulkanisier-mittel | " | 2 | 2 |
| Alterungs-schutzmittel | " | 0,5 | 0,5 |
| Zinkoxid | " | 5 | 5 |
| Schwefel | " | 2,5 | 2,5 |
| CR-Kautschuk | " | 100 | 100 |
| Pentabromdi-phenyläther | " | 8 | 12 |
| $Sb_4O_5Br_2$ | " | 10 | 10 |
| $Sb_2O_3$ | " | - | 8 |
| LOI | % | 38 | 38 |

Tabelle 3

### UP-Harz   (H)

| | | | |
|---|---|---|---|
| Kaolin | Gew.-Teile | 20 | 20 |
| Talkum | " | 10 | 10 |
| Co-Naphthenat | " | 0,3 | 0,3 |
| $Sb_2O_3$ | " | 7 | - |
| $Sb_4O_5Br_2$ | " | - | 6 |
| Peroxid | " | 2,5 | 2,5 |
| UP-Harz mit 26 % Cl auf HET-Säure-Basis | " | 70 | 70 |

### Brandverhalten

| | | | |
|---|---|---|---|
| Nachbrennen | sek | 1 | 1 |
| nicht zerstörte Restlänge | mm | 289 | 290 |
| LOI | % | 34 | 34 |

### PUR-Schaum   (I)

| | | |
|---|---|---|
| Polyol | Gew.-Teile | 39,8 |
| Stabilisator | " | 0,06 |
| Teibmittel | " | 15,9 |
| Trichloräthyl-phosphat | " | 20 |
| $Sb_4O_5Br_2$ | " | 6 |
| Isocyanat | " | 46 |

### Brandverhalten

| | | |
|---|---|---|
| nach DIN 4102 | | B-2 |
| nach ASTM | sek | 10 |
| | mm | 5 |

Patentanspruch

1. Brandgeschützte thermoplastische Kunststoffe, elastomere Kunststoffe, kautschukartige Kunststoffe, duromere Kunststoffe und Kautschuk mit einem Gehalt an halogen- und antimonhaltigen Brandschutzkomponenten, dadurch gekennzeichnet, daß diese Kunststoffe als antimonhaltige Brandschutzkomponente solche der allgemeinen Formel $Sb_4O_5X_y$, worin X ein Chlor-, Brom- oder Sulfatanion und y 2 oder 1 ist, in Mengen von 1 bis 20 Gew%, vorzugswesie 5 bis 10 Gew% enthalten.